# EUROPÄISCHE PATENTSCHRIFT

(11) **EP 2 823 069 B1**
(45) Veröffentlichungstag und Bekanntmachung des Hinweises auf die Patenterteilung: **07.11.2018**
(21) Anmeldenummer: 13713803.8
(22) Anmeldetag: 21.03.2013
(51) Int. Cl.: C21C 5/52, F27B 3/28, H05B 7/148, F27B 3/08, F27B 14/06, F27D 11/10

(54) **VERFAHREN ZUM BETREIBEN EINES LICHTBOGENOFENS UND SCHMELZANLAGE MIT EINEM NACH DIESEM VERFAHREN BETRIEBENEN LICHTBOGENOFEN**
METHOD FOR OPERATING AN ARC OVEN AND MELTING ASSEMBLY WITH AN ARC OVEN OPERATED ACCORDING TO THIS METHOD
PROCÉDÉ DE FONCTIONNEMENT D'UN FOUR À ARC ET INSTALLATION DE FUSION DOTÉE D'UN FOUR À ARC FONCTIONNANT SELON CE PROCÉDÉ

(30) Priorität: 11.04.2012 EP 12163722
(43) Veröffentlichungstag der Anmeldung: 14.01.2015
(73) Patentinhaber: Primetals Technologies Germany GmbH, 91052 Erlangen (DE)
(72) Erfinder: BACKES, Ralph-Herbert, 91056 Erlangen (DE); DÖBBELER, Arno, 91074 Herzogenaurach (DE)
(74) Vertreter: Metals@Linz
(86) Internationale Anmeldenummer: PCT/EP2013/055951
(87) Internationale Veröffentlichungsnummer: WO 2013/152937

(56) Entgegenhaltungen:
- EP-A1- 0 895 441
- WO-A1-2011/036071
- DE-A1- 19 711 453
- DE-A1-102007 041 632
- DE-A1-102009 031 355
- JP-A- 8 273 826
- JANSEN T ET AL: "Schallbasierte Schaumschlackendetektion zur Leistungsregelung eines Elektrolichtbogenofens", STAHL UND EISEN, VERLAG STAHLEISEN, DUSSELDORF, DE, Bd. 130, Nr. 9, 15. September 2010 (2010-09-15), Seiten 53-55,59,60, XP001557862, ISSN: 0340-4803

## Beschreibung

Die Erfindung bezieht sich auf ein Verfahren zum Betreiben eines Lichtbogenofens. Die Erfindung bezieht sich außerdem auf eine Schmelzanlage mit einem nach diesem Verfahren betriebenen Lichtbogenofen.

In einem Lichtbogenofen wird stückiges Schmelzgut, in der Regel Stahlschrott, gegebenenfalls zusammen mit weiteren Zuschlagstoffen durch einen zwischen dem Schmelzgut und mindestens einer Elektrode gezündeten Lichtbogen aufgeschmolzen. Hierzu wird dem Lichtbogenofen von einem Mittel- oder Hochspannungsnetz elektrische Energie zugeführt, die mittels eines sogenannten Ofentransformators in den Niederspannungsbereich übertragen wird. Von diesem Ofentransformator wird die Energie über ein Hochstromsystem der Elektrode zugeführt. An der Spitze der Elektrode brennt dann ein Lichtbogen, mit dem der im Ofengefäß vorhandene Metallschrott aufgeschmolzen wird.

Die die elektrische Energieversorgung des Lichtbogenofens betreffenden Anlagenkomponenten bestehen im Wesentlichen aus einer sogenannten Ofenschaltanlage, einem Ofentransformator und einem Hochstromsystem, das beispielsweise stromführende, höhenverstellbare Tragarme umfasst, an denen die Elektroden befestigt sind. Geregelt wird der Höhenstand der Elektroden und somit der Energieeintrag im Schmelzgut durch eine Elektrodenregelung. Auf diese Weise ergibt sich eine breite Palette von Arbeitspunkten bzw. Betriebsbedingungen, die sich hinsichtlich der Leistungsanforderungen an die Anlagenkomponenten erheblich unterscheiden können.

Die Auslegung und Auswahl der Anlagenkomponenten erfolgt in der Regel auf der Grundlage von Erfahrungswerten für den jeweiligen Lichtbogenofen. So erfolgt beispielsweise die Auslegung des Ofentransformators in Abhängigkeit von der Größe des Lichtbogenofens, der Art des Stahlschrotts und der gewünschten Produktivität, d.h. Schmelzleistung (Masse des pro Zeiteinheit aufzuschmelzenden Stahlschrotts), die die erforderliche Schmelzzeit des Lichtbogenofens festlegt. Dabei werden neben einer Festlegung der Scheinleistung im Bereich bis etwa 300 MVA, die Anzahl der Stufen und die Spannungen der Stufen des Ofentransformators, beispielsweise achtzehn Stufen mit Spannungen bis ca. 1500 V, und die Ströme, die etwa bis ca. 100 kA betragen können, definiert.

Um eine Schädigung der die Betriebsbedingungen des Lichtbogenofens beeinflussenden Anlagenkomponenten, insbesondere des Ofentransformators sicher zu vermeiden, wird jedoch das tatsächlich zumindest kurzfristig vorhandene Leistungspotential der Anlagenkomponenten aus Sicherheitsgründen nicht im möglichen Maß ausgenutzt und dementsprechend eine verringerte Produktivität in Kauf genommen, wie z.B. in DE 19711453 A1 bzw. in JP 8-273826 A offenbart worden ist.

Der Erfindung liegt daher die Aufgabe zu Grunde, ein Verfahren zum Betreiben eines Lichtofenbogens anzugeben, mit dem es möglich ist, die Produktivität eines Lichtbogenofens zu erhöhen. Der Erfindung liegt außerdem die Aufgabe zu Grunde, eine Schmelzanlage mit einem nach diesem Verfahren betriebenen Lichtbogenofen anzugeben.

Die erstgenannte Aufgabe wird gemäß der Erfindung gelöst mit einem Verfahren mit den Merkmalen des Patentanspruches 1. Gemäß diesen Merkmalen wird für eine Mehrzahl von die Betriebsbedingungen des Lichtbogenofens beeinflussenden Anlagenkomponenten jeweils zumindest ein Messwert für eine deren Betriebszustand charakterisierende Messgröße erfasst und mit einem für diese Messgröße jeweils aktuell zulässigen Grenzwert verglichen und es wird anhand des Vergleichsergebnisses ein Zeitfenster und eine innerhalb dieses Zeitfensters dem Lichtbogenofen unter Einhaltung aller aktuell zulässigen Grenzwerte maximal zuführbare Leistung ermittelt.

Durch diese Maßnahme ist es möglich, einen Lichtbogenofen unter Ausnutzung seiner optimalen Produktivität zu betreiben, da ein aktuell verfügbarer Lastbereich genutzt werden kann, um zumindest kurzzeitig, d.h. innerhalb eines Zeitfensters, das kleiner ist als die Schmelzzeit (Zeit zwischen Erstbeschickung des Lichtbogenofens und Abstechen der Schmelze), beim Einschmelzen mehr Leistung zur Verfügung zu haben oder um ungeplante Produktionsverluste auszugleichen, ohne beispielsweise den Ofentransformator zu schädigen.

Das Zeitfenster wird unter Ausnutzung von Erfahrungswerten automatisch ermittelt, wobei die Dauer des Zeitfensters und die maximal zuführbare Leistung in der Regel voneinander abhängen, so dass dem Bediener die Möglichkeit eröffnet wird, den Lichtbogenofen wahlweise mit niedriger Maximalleistung und langem Zeitfenster oder hoher Maximalleistung und kurzem Zeitfenster zu betreiben. Alternativ hierzu kann die Dauer des Zeitfensters auch unbestimmt sein und dessen Ende dadurch bestimmt sein, dass der Betrieb des Lichtbogenofens mit der ermittelten maximalen Leistung beendet wird, wenn ein aktuell zulässiger Grenzwert für eine Messgröße an einer der Anlagenkomponenten erreicht wird.

Da die Anlagenkomponenten hinsichtlich ihrer Grenzwerte zum Erreichen einer vorgegebenen Produktivität optimal ausgenutzt werden können, können bei Neuanlagen Anlagenkomponenten bedarfsoptimiert ausgelegt, und somit kostenverursachende Überdimensionierungen vermieden werden.

Der aktuell zulässige Grenzwert kann dabei ein vorgegebener fester, unveränderlicher Wert, beispielsweise die Spannungsfestigkeit einer elektrischen Anlagenkomponente, oder ein zeitlich variabler, von den durch die Messwerte erfassten aktuellen Betriebsbedingungen des Lichtbogenofens abhängiger Wert sein. Ein solcher variabler Wert kann beispielsweise die maximale Leistung des Ofentransformators sein, die innerhalb eines Zeitfensters einen vorgegebenen Grundwert um einen maximal möglichen vorbestimmten Betrag überschreiten kann, solange ein anderer aktuell zulässiger Grenzwert, beispielsweise eine am Ofentransformator gemessene Temperatur, nicht überschritten wird.

Die erfindungsgemässe Ermittlung des maximal verfügbaren Lastbereiches wird erzielt, wenn die maximal zuführbare Leistung und/oder die Länge des Zeitfensters unter Zuhilfenahme einer Prädiktion des zeitlichen Verlaufes wenigstens einer der Messgrößen ermittelt werden. Auf diese Weise ist sichergestellt, dass die Anlagenkomponente innerhalb des Zeitfensters nicht überbelastet wird, so dass ein durch Überlast hervorgerufener Ausfall vermieden wird.

Vorzugsweise werden als Messgröße ein durch die Anlagenkomponente fließender elektrischer Strom, eine an der Anlagenkomponente anliegende elektrische Spannung und/oder eine Temperatur der Anlagenkomponente erfasst.

In einer weiteren bevorzugten Ausführungsform wird eine den Betriebszustand einer Anlagenkomponente mittelbar beeinflussende Hilfseinrichtung, bei der es sich insbesondere um eine von einem Kühlfluid durchströmte Kühleinrichtung handelt, gesteuert, indem die Eintrittstemperatur und/oder der Durchsatz des Kühlfluids zur Einhaltung einer als aktuellen oder als fest vorgegebenen Grenzwert festgelegten Temperatur der Anlagenkomponente gesteuert werden.

In einer weiteren bevorzugten Ausführungsform des Verfahrens ist der Grenzwert eine Temperatur der Anlagenkomponente, wobei als thermische Abschirmung zum Schutz der Anlagenkomponente vor der Strahlung des Lichtbogens schäumende Schlacke verwendet wird.

Hinsichtlich der Schmelzanlage wird die Aufgabe gemäß der Erfindung gelöst mit den Merkmalen des Patentanspruches 8, die sinngemäß den Merkmalen des Patentanspruches 1 entsprechen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Für eine weitere Beschreibung der Erfindung wird auf die Ausführungsbeispiele der Zeichnungen verwiesen. Es zeigen in einer schematischen Prinzipskizze:
Fig. 1 eine Schmelzanlage mit einem Lichtbogenofen,
Fig. 2 ein Diagramm, in dem die der Schmelze zugeführte Leistung gegen die Zeit aufgetragen ist.

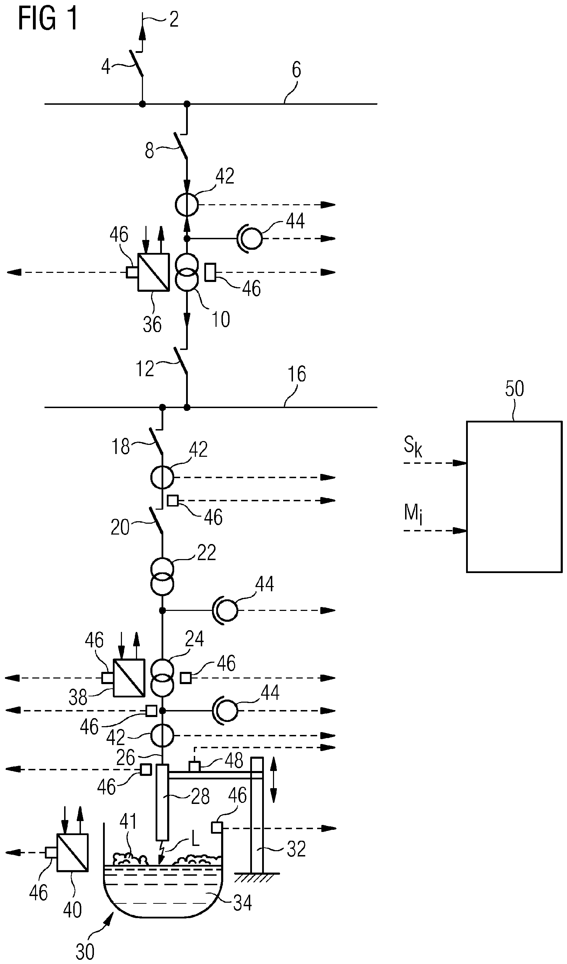

Gemäß Fig. 1 wird die zum Betreiben der Schmelzanlage erforderliche elektrische Energie von einem Kabel oder einer Freileitung 2 über einen Hochspannungs-Einspeiseschalter 4 einer Hochspannungs-Sammelschiene 6 zugeführt. Die an der Hochspannungs-Sammelschiene 6 anliegende Hochspannung wird über einen Hochspannungs-Abgangsschalter 8 einem Abspanntransformator 10 zugeleitet, der die Hochspannung auf eine Mittelspannung transformiert. Die Sekundärseite des Abspanntransformators 10 ist über einen Mittelspannungs-Einspeiseschalter 12 elektrisch an eine Mittelspannungs-Sammelschiene 16 angeschlossen. Die an der Mittelspannungs-Sammelschiene 16 anliegende Spannung wird über einen Abgangsschalter 18, einen Ofenschalter 20 und über eine Ofenvordrossel 22 der Primärseite eines Ofentransformators 24 zugeführt, dessen Sekundärseite über Hochstromseile 26 an eine Elektrode 28 eines Lichtbogenofens 30 angeschlossen ist. Die Elektrode 28 ist höhenverstellbar an einer Tragsäule 32 angeordnet, um die Länge des zwischen Elektrode 28 und Schmelzgut 34 brennenden Lichtbogens und dementsprechend den Energieeintrag in den Lichtbogenofen 30 einstellen zu können.

Die in der Fig. 1 gezeigten, die elektrische Versorgung der Elektrode 28 betreffenden Anlagenkomponenten stellen dabei nur eine, beispielhafte Auswahl dar und umfassen nicht alle in der Praxis tatsächlich vorhandenen Anlagenkomponenten.

Neben den elektrischen Anlagenkomponenten umfasst die Schmelzanlage auch nichtelektrische Anlagenkomponenten, die in der Fig. 1 ebenfalls beispielhaft und nicht abschließend durch Kühleinrichtungen 36, 38 und 40 veranschaulicht sind, mit denen eine Kühlung des Abspanntransformators 10, des Ofentransformators 24 bzw. von Wandelementen des Lichtbogenofens 30 erfolgt.

In der Fig. 1 ist außerdem schäumende Schlacke 41 veranschaulicht, mit der bei Bedarf die thermische Strahlung des Lichtbogens L abgeschirmt werden kann, um die thermische Belastung der in unmittelbarer Nähe des Lichtbogens L befindlichen Komponenten zu verringern.

Sowohl auf der Primärseite des Abspanntransformators 10 als auch auf der Primär- und Sekundärseite des Ofentransformators 24 sind Messeinrichtungen 42 und 44 zum Messen des Stroms bzw. der Spannung vorgesehen.

Als weitere Messeinrichtungen sind Temperaturmesseinrichtungen 46 veranschaulicht, mit denen als Messgröße die Temperatur an unterschiedlichen thermisch belasteten Stellen der Schmelzanlage direkt gemessen oder auf der Grundlage eines thermischen Modells indirekt ermittelt werden. Beispielhaft und nicht abschließend sind solche Temperaturmesseinrichtungen 46 dargestellt am Abspanntransformator 10, an den speisenden Kabelsystemen, an der Primär- und Sekundärseite des Ofentransformators 24 sowie an der Wand des Ofengefäßes und an der Elektrode 28.

Darüber hinaus werden außerdem Eintritts- und Austrittstemperatur sowie der Durchsatz des durch die Kühleinrichtungen 36, 38 und 40 strömenden Kühlmittels erfasst.

Grundsätzlich können auch Messeinrichtungen 48 vorgesehen sein, mit denen mechanische Messgrößen, beispielsweise Schwingungen des Tragarms der Tragsäule 32, erfasst werden.

Die von den Messeinrichtungen 42, 44, 46, 48 für die jeweiligen elektrischen, thermischen bzw. mechanischen Messgrößen erfassten Messwerte Mᵢ, i = 1 bis n, werden - symbolisch veranschaulicht durch gestrichelt eingezeichnete Pfeile - einer Steuer- und Auswerteeinrichtung 50 zugeleitet. In der Steuer- und Auswerteeinrichtung 50 sind die für Messgrößen der überwachten Anlagenkomponenten jeweils zulässigen Grenzwerte in Form einer Look-up-Tabelle oder eines dynamischen Modells hinterlegt. Diese zulässigen Grenzwerte können für bestimmte Anlagenkomponenten fest vorgegeben sein, können aber auch zusätzlich von Messwerten anderer, insbesondere an derselben Anlagenkomponente gemessener Messgrößen abhängen. So kann beispielsweise der zulässige Grenzwert für die vom Ofentransformator 24 übertragene Leistung eine Funktion seiner Temperatur sein, und mit wachsender Temperatur abnehmen. Die Temperatur des Ofentransformators 24 kann wiederum durch die Eintrittstemperatur und den Durchsatz des Kühlmittels durch die Kühleinrichtung 38 beeinflusst werden. Zusätzlich kann dieser zulässige Grenzwert auch noch von der Länge des Zeitfensters abhängig sein, innerhalb der der Arbeitspunkt auf diesen Grenzwert eingestellt werden soll. So ist beispielsweise der bei einer gemessenen Temperatur zulässige Grenzwert umso höher, je kürzer das Zeitfenster ist.

Anhand eines Vergleiches der gemessenen Messwerte mit den gegebenenfalls unter Berücksichtigung dieser Messwerte ermittelten aktuell zulässigen Grenzwerten werden nun ein Zeitfenster und die innerhalb dieses Zeitfensters dem Lichtbogenofen 30 maximal zuführbare Leistung ermittelt. Diese werden beispielsweise einem Benutzer in der Leitwarte angezeigt, so dass dieser bei Bedarf in der Lage ist, die Produktivität zu erhöhen, wobei außerdem durch die Auswerte- und Steuereinrichtung 50 ein Überschreiten dieser maximalen Leistung auch im Falle einer manuellen Steuerung blockiert ist. Alternativ hierzu kann auch eine automatisierte Fahrweise vorgesehen sein, bei der der Lichtbogenofen 30 automatisch innerhalb des ermittelten Zeitfensters mit der maximal zuführbaren Leistung betrieben wird.

Wesentlich für die Betriebssicherheit ist dabei, dass für alle Anlagenkomponenten die aktuell zulässigen Grenzwerte nicht überschritten werden. Wenn beispielsweise der Betrieb der Schmelzanlage bei der maximal zuführbaren Leistung dazu führt, dass der für eine Anlagenkomponente aktuell zulässige Grenzwert erreicht wird, werden von der Steuereinrichtung 50 automatisch Steuersignale Sₖ, k = 1 bis m, für die Schmelzanlage generiert, die dazu führen, dass dieser Grenzwert nicht überschritten wird. Erreicht beispielsweise die thermische Belastung der Elektrode 28 einen aktuell geltenden Grenzwert obwohl der Ofentransformator mit einer Leistung betrieben wird, die für die gemessenen Temperatur und das eingestellte Zeitfenster geltenden zulässigen Grenzwert nicht überschreitet, wird entweder diese Leistung reduziert, um ein Überschreiten des für die Temperatur der Elektrode 28 aktuell zulässigen Grenzwertes zu verhindern oder es werden beispielsweise Maßnahmen eingeleitet, die eine effizientere Kühlung der Elektrode 28 bewirken.

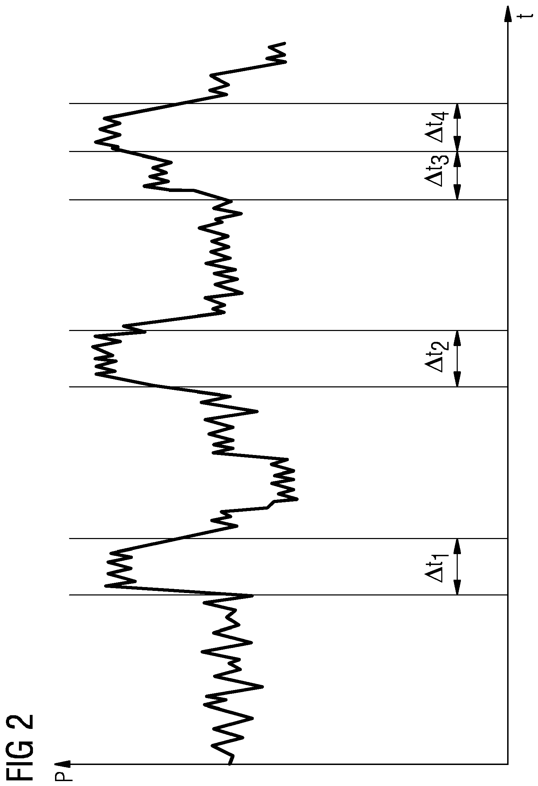

Fig. 2 zeigt in einem vereinfachten Diagramm eine mögliche Fahrweise beim Betrieb des Lichtbogenofens. In diesem Diagramm ist die zugeführte Leistung P gegen die Zeit t aufgetragen. Dem Diagramm ist zu entnehmen, dass die dem Lichtbogenofen zugeführte Leistung P innerhalb mehrerer kurzer Zeitfenster Δt₁, Δt₂, Δt₃, Δt₄, deren Dauer kleiner ist als die Schmelzzeit, signifikant gegenüber einer Grundleistung P₀, mit der ein Dauerbetrieb möglich wäre, erhöht ist. In diesen Zeitfenstern Δtᵢ werden die anhand der aktuellen Betriebsbedingungen, d.h. der aktuell von den Messeinrichtungen erfassten Messwerte die aktuell verfügbaren Grenzwerte ermittelt und die daraus abgeleiteten und innerhalb dieser Zeitfenster Δtᵢ maximal möglichen Leistungen abgeleitet. Diese Zeitfenster Δtᵢ sind dabei entweder von der Auswerte- und Steuereinrichtung auf der Grundlage des aktuellen Betriebszustandes und/oder einem erwarteten Verlauf der Änderungen dieses Betriebszustandes ermittelt und dementsprechend vorgegeben oder durch ein Abbruchkriterium, beispielsweise Erreichen eines aktuell zulässigen Grenzwertes, bestimmt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben eines Lichtbogenofens (30), bei dem für eine Mehrzahl von die Betriebsbedingungen des Lichtbogenofens (30) beeinflussenden Anlagenkomponenten jeweils zumindest ein Messwert (Mᵢ) für eine deren Betriebszustand charakterisierende Messgröße erfasst und mit einem für diese Messgröße jeweils aktuell zulässigen Grenzwert verglichen wird und anhand des Vergleichsergebnisses eine innerhalb eines Zeitfensters (Δtᵢ) dem Lichtbogenofen (30) unter Einhaltung aller aktuell zulässigen Grenzwerte maximal zuführbare Leistung (P) ermittelt wird, bei dem die maximal zuführbare Leistung (P) und/oder die Länge des Zeitfensters (Δtᵢ) unter Zuhilfenahme einer Prädiktion des zeitlichen Verlaufes wenigstens einer der Messgrößen ermittelt werden.

2. Verfahren nach Anspruch 1,
bei dem der Lichtbogenofen (30) automatisch mit der maximal zuführbaren Leistung (P) betrieben wird.

3. Verfahren nach Anspruch 1 oder 2, bei dem als Messgröße ein durch die Anlagenkomponente fließender elektrischer Strom, eine an der Anlagenkomponente anliegende elektrische Spannung und/oder eine Temperatur der Anlagenkomponente erfasst werden.

4. Verfahren nach einem der vorhergehenden Ansprüche, bei dem eine den Betriebszustand der Anlagenkomponenten mittelbar beeinflussende Hilfseinrichtung gesteuert wird.

5. Verfahren nach Anspruch 4, bei dem der Grenzwert eine Temperatur der Anlagenkomponente und die Hilfseinrichtung eine von einem Kühlfluid durchströmte Kühleinrichtung (38) ist, und bei dem die Eintrittstemperatur und/oder der Durchsatz des Kühlfluids zur Einhaltung einer als Grenzwert festgelegten Temperatur gesteuert wird.

6. Verfahren nach Anspruch 4, bei dem der Grenzwert eine Temperatur der Anlagenkomponente ist, wobei als thermische Abschirmung zum Schutz der Anlagenkomponente vor der Strahlung des Lichtbogens (L) schäumende Schlacke (41) wird.

7. Schmelzanlage mit einem Lichtbogenofen (30) mit einer Mehrzahl von Messeinrichtungen (42,44,46,48) zum Erfassen von Messwerten (Mᵢ), die den Betriebszustand einer Mehrzahl von die Betriebsbedingungen des Lichtbogenofens (30) beeinflussenden Anlagenkomponenten charakterisieren, sowie mit einer Steuer- und Auswerteeinrichtung (50) mit einem darin implementierten Algorithmus zum Auswerten der erfassten Messwerte (Mᵢ) und/oder Steuern des Lichtbogenofens (30) mit einem Verfahren nach einem der vorhergehenden Ansprüche.

## Claims

1. Method for operating an electric arc furnace (30) by which at least one measured value (Mᵢ), for a measurement variable which characterises its operating state, is sensed for each of a plurality of plant components which influence the operating conditions of the electric arc furnace (30), and in each case is compared with a currently permissible limiting value for this measurement variable and, by reference to the result of the comparison, the maximum power (P) which can be fed to the electric arc furnace (30) within a time window (Δtᵢ) while adhering to all the currently permissible limiting values is determined, in which the maximum power which can be fed in (P) and/or the length of the time window (Δtᵢ) are determined with the assistance of a prediction of the course over time of at least one of the measurement variables.

2. Method according to claim 1,
in which the electric arc furnace (30) is operated automatically with the maximum power (P) which can be fed to it.

3. Method according to claim 1 or 2,
in which an electric current flowing through the plant component, an electric voltage across the plant component and/or a temperature of the plant component are sensed as the measurement variable.

4. Method in accordance with one of the preceding claims, in which an auxiliary device, which indirectly influences the operating state of the plant components, is controlled.

5. Method according to claim 4,
in which the limiting value is a temperature of the plant component and the auxiliary device is cooling equipment (38) through which a cooling fluid flows, and in which the input temperature and/or the throughput of the coolant is controlled for the purpose of maintaining a temperature defined as a limiting value.

6. Method according to claim 4,
in which the limiting value is a temperature of the plant component, where foaming slag (41) acts as thermal screening to protect the plant component from the radiation from the electric arc (L).

7. Smelting plant with an electric arc furnace (30), with a plurality of measurement equipment (42,44,46,48) for sensing measured values (Mᵢ) which characterise the operating state of a plurality of plant components which influence the operating conditions of the electric arc furnace (30), together with a control and analysis facility (50) with an algorithm implemented in it for evaluating the measured values (Mᵢ) which are sensed and or for controlling the electric arc furnace (30) using a method according to one of the preceding claims.

## Revendications

1. Procédé de fonctionnement d'un four à arc (30), dans lequel on relève, pour une pluralité de composants de l'installation influant sur les conditions de fonctionnement du four à arc (30), à chaque fois au moins une valeur de mesure (Mᵢ) pour une grandeur de mesure caractérisant leur état de fonctionnement et on la compare à une valeur limite admissible instantanément pour cette grandeur de mesure, puis on détermine, sur la base du résultat de la comparaison, une puissance (P) maximale pouvant être acheminée au four à arc (30) à l'intérieur d'une fenêtre temporelle (Δtᵢ) en respectant toutes les valeurs limites admissibles instantanément, dans lequel la puissance (P) maximale pouvant être acheminée et/ou la longueur de la fenêtre temporelle (Δtᵢ) est déterminée à l'aide d'une prédiction de l'évolution dans le temps d'au moins une des grandeurs de mesure.

2. Procédé selon la revendication 1, dans lequel le four à arc (30) fonctionne automatiquement avec la puissance (P) maximale pouvant être acheminée.

3. Procédé selon la revendication 1 ou 2, dans lequel on relève, en tant que grandeur de mesure, un courant électrique s'écoulant à travers les composants de l'installation, une tension électrique appliquée aux composants de l'installation et/ou une température des composants de l'installation.

4. Procédé selon l'une des revendications précédentes, dans lequel un dispositif auxiliaire influant indirectement sur l'état de fonctionnement des composants de l'installation est commandé.

5. Procédé selon la revendication 4, dans lequel la valeur limite est une température des composants de l'installation et le dispositif auxiliaire est un dispositif de refroidissement (38) traversé par un fluide de refroidissement, et dans lequel la température d'entrée et/ou le débit du fluide de refroidissement est commandé(e) pour maintenir une température fixée en tant que valeur limite.

6. Procédé selon la revendication 4, dans lequel la valeur limite est une température des composants de l'installation, un laitier moussant (41) étant utilisé en tant qu'écran thermique pour protéger les composants de l'installation du rayonnement du four à arc (L).

7. Installation de fusion comprenant un four à arc (30), équipée d'une pluralité de dispositifs de mesure (42, 44, 46, 48) permettant de relever des valeurs de mesure (Mᵢ) qui caractérisent l'état de fonctionnement d'une pluralité de composants de l'installation influant sur les conditions de fonctionnement du four à arc (30), et comprenant un dispositif de commande et d'analyse (50) dans lequel un algorithme d'analyse des valeurs de mesure (Mᵢ) relevées et/ou de commande du four à arc (30) avec un procédé selon l'une des revendications précédentes est mis en oeuvre.
